(19) Europäisches Patentamt
European Patent Office
Office européen des brevets

(11) **EP 2 375 561 B1**

(12) **EUROPEAN PATENT SPECIFICATION**

(45) Date of publication and mention
of the grant of the patent:
**29.04.2020  Bulletin 2020/18**

(21) Application number: **08879107.4**

(22) Date of filing: **22.12.2008**

(51) Int Cl.:
*H02J 3/32* *(2006.01)*          *H02J 3/38* *(2006.01)*
*F03D 9/11* *(2016.01)*          *H02P 9/04* *(2006.01)*

(86) International application number:
**PCT/JP2008/073301**

(87) International publication number:
**WO 2010/073310 (01.07.2010 Gazette 2010/26)**

(54) **POWER MANAGEMENT CONTROL SYSTEM FOR NATURAL ENERGY POWER GENERATION SYSTEM PROVIDED WITH STORAGE BATTERY**

POWER-MANAGEMENT-STEUERSYTSTEM FÜR EIN MIT SPEICHERBATTERIE AUSGESTATTETES NATÜRLICHES ENERGIESTROMERZEUGUNGSSYSTEM

SYSTÈME DE COMMANDE DE GESTION D'ÉNERGIE POUR UN SYSTÈME DE PRODUCTION D'ÉNERGIE NATURELLE MUNI D'UN ACCUMULATEUR

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**12.10.2011   Bulletin 2011/41**

(73) Proprietor: **Japan Wind Development Co., Ltd.**
**Minato-ku**
**Tokyo 1050003 (JP)**

(72) Inventors:
• **BANDO, Matsuo**
**Tokyo 105-0003 (JP)**

• **KITAMURA, Takeshi**
**Tokyo 105-0003 (JP)**

(74) Representative: **Mewburn Ellis LLP**
**Aurora Building**
**Counterslip**
**Bristol BS1 6BX (GB)**

(56) References cited:
**JP-A- 2001 327 080      JP-A- 2006 280 020**
**JP-A- 2006 280 020      JP-A- 2008 182 859**
**JP-A- 2008 289 222      US-A1- 2008 179 887**
**US-A1- 2008 224 541**

**Description**

Technical Field

The present invention relates to a natural energy power generation system with a storage battery, and particularly relates to a power management and control technique in a natural energy power generation system with a storage battery.

Background Art

Since in natural energy power generation, power is generated with use of natural energy as a motive power, the output power significantly varies depending on climate conditions, and natural energy power generation has the limits in power transmission to a power network in coordination therewith.

For example, in the case of wind power generation, power is generated with natural wind power as a motive power, and therefore, the output power thereof varies in accordance with variations in a wind speed and the like. Therefore, in recent years, it has become difficult to transmit the power obtained by wind power generation directly to the power network of a power company in coordination therewith.

Thus, there are increasing cases in which by placing power storage facilities constituted of a plurality of storage batteries in juxtaposition with wind power stations, the generation power which varies depending on natural conditions such as wind speed is charged in or discharged from the storage batteries, whereby the output power is stabilized and transmitted to the power networks (refer to, for example, Patent Document 1), and the power obtained by wind power generation is stored during nighttime when there is little demand for power, and is transmitted to the power system in coordination therewith during daytime when there is a great demand for power. In the aforesaid Patent Document 1, variation of the generation power to be supplied to a power network from a wind power generator is measured for each very short unit time, the average value of the generation power of the wind generator in the very small unit time is obtained, the average value and the generation power at the present time point are compared, when the generation power of the wind generator at the present time point exceeds the average value in the very small unit time, the amount of power equivalent to the average value of the generation power is supplied to the power network, and the amount of power beyond the average value is stored in power storing means (storage battery or the like), whereas when the generation power of the wind generator at the present time point falls below the average value in the very short unit time, all of the generation power is supplied to the power line and the amount of power by which the generation power falls below the average value of the generation power is supplied to the power network from the power storing means, whereby the wind power generation output is stabilized. In addition, as the related documents, there are known Patent Document 2 (disclosing the point of linking with the power supply instruction device which controls a power transmission system and a power distribution system), Patent Document 3 (disclosing the point of being able to keep the power supply amount constant by using prediction data for making prediction according to time), Patent Document 4 (disclosing the point in that a power control interface is provided between a power supply which is unstable like a wind power generation apparatus and a power transmission line, and an electric energy storage unit, a control system and an electronic compensation module are used to work as "electronic buffer device" for storing excessive power output when the generation power is increased and discharging the stored energy when the generation power is decreased due to variation in wind power in corporation with each other), and Patent Document 5 (disclosing the point of making a charge and discharge schedule and leveling setting based on the wind turbine output prediction value).

Patent Document 1: JP Patent No. 3758359
Patent Document 2: JP Patent No. 3981690
Patent Document 3: JP Patent No. 3740099
Patent Document 4: JP Patent Publication (Kohyo) No. 2006-511190
Patent Document 5: JP Patent Publication (Kohyo) No. 3905692

Patent Document US 2008/179887 A1 discloses a wind power generation system comprising a battery. Said system is adapted to feed constant power into a grid for a predetermined time.

Disclosure of the Invention

Problems to be Solved by the Invention

Incidentally, more often than not, power exchange in Japan needs to fix a plan the day before transfer and before that (for example, Japan Electric Power Exchange and the like), and has such setup that the power for which the supply plan is not fixed in advance is exchanged at a low price as excessive power, and if shortage occurs with respect to the plan, expensive supplemental power is received.

The aforementioned natural energy power generation system with a storage battery can transmit power in accordance with the supply plan which is set in advance by charge and discharge control in spite of natural energy power generation which varies depending on natural conditions.

In natural energy power generation, a power generation amount is generally predicted, and the supply plan is settled with reference to the predicted power generation amount. Since the time difference between the transfer time and the time of plan settlement is large in the existing power exchange, enhancement in precision of power generation prediction is being searched for (For example, in NEDO, research is underway.), but the prediction precision of the power generation amount is limited. Therefore, in order to supply power reliably according to the supply plan, it is necessary to be prepared for the case in which the power generation amount is significantly excessive or insufficient with respect to the power generation amount predicted beforehand, and increase in capacity of a storage battery, installation of the supplemental standby power supply or the like becomes a problem in construction of a power station with a storage battery.

As the aforesaid supplemental standby power supply, there is the method which places an additional power supply (diesel generator or the like) which can control output power in the power station in juxtaposition therewith in order to make up the supply amount shortage, or places the additional power supply in the area in the same system, but increase in equipment cost is the problem.

In the case without any supplemental standby power supply, and in the case where the power generation amount significantly falls below the prediction and power cannot be transmitted as in the supply plan even by discharge from the storage battery, the cases cannot be help being handled by changing the plan, but comparatively expensive replenishment needs to be received with respect to the insufficient power amount. In contrast with this, if the power generation amount significantly exceeds the prediction, an operation of being paralleled off from the power network to prevent outflow of the power is forced, or it is necessary to ask the power network to accept the power amount outside the plan at a comparatively low unit price, and there arises the problem of limiting the supply amount and the supply unit price, which leads to reduction in profitability.

Accordingly, an operation of always securing a free space of the storage battery is forced in preparation for the case where the power generation amount differs from the prediction, that is, in preparation for the case of the excessive power generation amount, or an operation of securing the storage amount of the storage battery in preparation for a power generation shortage is forced, and the storage battery capacity needs to be increased in order to make up a prediction error. There arises the problem of being disadvantageous from the viewpoint of cost since the price of the storage battery itself is high, the cost required for installation of the storage battery is excessive, and the facility for installation of the storage battery and the AC/DC converter becomes large.

The present invention has an object to reduce the capacity of a storage battery in a natural energy power generation apparatus with a storage battery.

Means for Solving the Problems

According to one aspect of the present invention, there is provided a power management and control system which is a power management and control system in a natural energy power generation system with a storage battery including a natural energy power generation apparatus and a storage battery which charges and discharges part of power generated in the natural energy power generation apparatus, and combines total generation power from the natural energy power generation apparatus and power to be supplied from the storage battery to supply power to a power network, including a power generation control system which controls the generation power of the natural energy power generation apparatus based on a magnitude of power which can be charged in the storage battery.

Based on the magnitude of the chargeable power, the generation power of the natural energy power generation apparatus is controlled, and thereby, control is enabled even if the storage battery is reduced in capacity.

It is preferable to further have a power supervisory control unit which compares a generation power output upper limit target candidate value that depends on power which can be charged in or discharged from the storage battery, and a rated output value of the natural energy power generation apparatus, and controls the power generation control system with the power generation output upper limit target candidate value as a power generation output upper limit target value when the rated output value of the natural energy power generation apparatus is large. When the rated output value is larger as compared with the power generation output upper limit target candidate value, the power generation amount is suppressed to be close to the power generation output upper limit target value, and thereby, control is enabled even if the storage battery is reduced in capacity.

The power generation output upper limit target candidate value may be obtained from (power transmission plan power + station power consumption + chargeable power) × coefficient (value not larger than 1). By multiplying a coefficient which is not larger than 1, for example, the coefficient such as 0.9, an automatic operation can be performed with a margin left.

According to another aspect of the present invention, there is provided a power management and control system that is a power management and control system in a natural energy power generation system with a storage battery that is a natural energy power generation system with a storage battery which comprises a natural energy power generation apparatus and a storage battery which charges and discharges part of power generated in the natural energy power generation apparatus, and combines total generation power from the natural energy power generation apparatus and power to be supplied from the storage battery to supply power to a power network, the power management and control system having power transmission plan calculating means which receives power generation amount prediction data predicting a power generation amount in each unit time in the natural energy power generation apparatus, and calculates a plan for power transmission to the power network for keeping a power storage amount of the storage battery in a designated range, based on the power generation amount prediction data, controlling a charge and discharge amount of the storage battery based on a fixed power transmission plan which is fixed with reference to a power transmission plan calculation result by the power transmission plan calculating means to supply power to the power network in accordance with the fixed power transmission plan, having a power generation control system which controls the generation power of the natural energy power generation apparatus based on a magnitude of power which can be charged in the storage battery, and a power supervisory control unit which controls the power generation control system with any smaller one of a generation power output upper limit target candidate value that is obtained by calculation of (power transmission plan power + station power consumption + chargeable power) × coefficient (value not larger than 1), and a rated output power of the natural energy power generation apparatus as a power generation output upper limit target value. The invention calculates the power generation output upper limit target candidate value.

Further, there is provided a power management and control system that is a power management and control system in a natural energy power generation system with a storage battery that is a natural energy power generation system with a storage battery which comprises a natural energy power generation apparatus and a storage battery which charges and discharges part of power generated in the natural energy power generation apparatus, and combines total generation power from the natural energy power generation apparatus and power to be supplied from the storage battery to supply power to a power network, the power management and control system having power transmission plan calculating means which receives power generation amount prediction data predicting a power generation amount in each unit time in the natural energy power generation apparatus, and calculates a plan for power transmission to the power network for keeping a power storage amount of the storage battery in a designated range, based on the power generation amount prediction data, controlling a charge and discharge amount of the storage battery based on a fixed power transmission plan which is fixed with reference to a power transmission plan calculation result by the power transmission plan calculating means to supply power to the power network in accordance with the fixed power transmission plan, having a power generation control system which controls the generation power of the natural energy power generation apparatus based on a magnitude of power which can be charged in the storage battery, a power supervisory control unit which accepts input of a power generation output upper limit target candidate value of the natural energy power generation apparatus which is predicted from the power transmission plan power, the power which can be charged in the storage battery, and station power consumption, and a power supervisory control unit which controls the power generation control system with any smaller one of the inputted generation power output upper limit target candidate value and a rated output power of the natural energy power generation apparatus as a power generation output upper limit target value. The invention inputs the power generation output upper limit target candidate value.

The natural energy power generation apparatus may be a wind power generation apparatus, and in the case of a wind power generation apparatus, the generation power amount can be controlled by regulating a blade angle of a wind turbine. Thereby, the power generation amount can be easily controlled.

The present invention may be a control device for the natural energy power generation apparatus which is used in the power management and control system described above.

The present invention may be the above described power management control method, a program for causing a computer to execute the method, and a computer-readable recording medium which records the program.

Advantage of the Invention

According to the power management and control system according to the present invention, by combining the power generation prediction function and the power generation control function, the regulation range of the storage battery which should be ensured in preparation for the case in which the generation power of the natural energy power generation apparatus exceeds prediction can be reduced, whereby reduction in the storage battery capacity is realized, and contribution can be made to promotion of building a natural energy power station with a storage battery.

Brief Description of the Drawings

Figure 1 is a functional block diagram showing one configuration example of a natural energy power generation system with a storage battery according to one embodiment of the present invention.

Figure 2(A) is a sectional view of a wind power generator (wind turbine) observed from a side, and Figure 2(B) is a functional block diagram showing a simple configuration of the wind turbine.

Figure 3 is a flowchart showing a main flow of power management processing according to the present embodiment.

Figure 4 is a diagram showing a relationship of input and output of power in the case close to a full charge state in which power cannot be charged in a storage battery.

Figure 5 is a diagram showing one example of hourly changes of generation power of the wind turbine, charge/discharge power in a storage battery, and transmission power.

Figure 6 is a diagram showing a flow of electricity in a state in which power cannot be charged in the storage battery, that is, the state close to full charge (Figure 6(a)), and examples of a relationship of power generation and power transmission and time (Figures 6(b) to (e)).

Figure 7 is a diagram showing a flow of electricity in the state in which the storage battery cannot discharge power, that is, the state close to the end of discharge (Figure 7(a)), and examples of the relationship of power transmission and time (Figures 7(b) to (d)).

Description of Symbols

A ... WIND POWER GENERATION SYSTEM, B ... WIND TURBINE GROUP, 1 ... WIND TURBINE POWER GENERATION APPARATUS, 3 ... OPTICAL NETWORK CABLE, 5 ... WIND TURBINE GROUP CONTROL DEVICE, 11 ... POWER SUPERVISORY CONTROL DEVICE, 15 ... STORAGE BATTERY CONTROL DEVICE, 17 ... STORAGE BATTERY, 21 ... AC/DC CONVERTING DEVICE, 23 ... TRANSFORMER, 27 ... POWER NETWORK, 37 ... POWER GENERATION PREDICTION SYSTEM, 41 ... POWER GENERATION PLAN CREATING DEVICE

Best Mode for Carrying Out the Invention

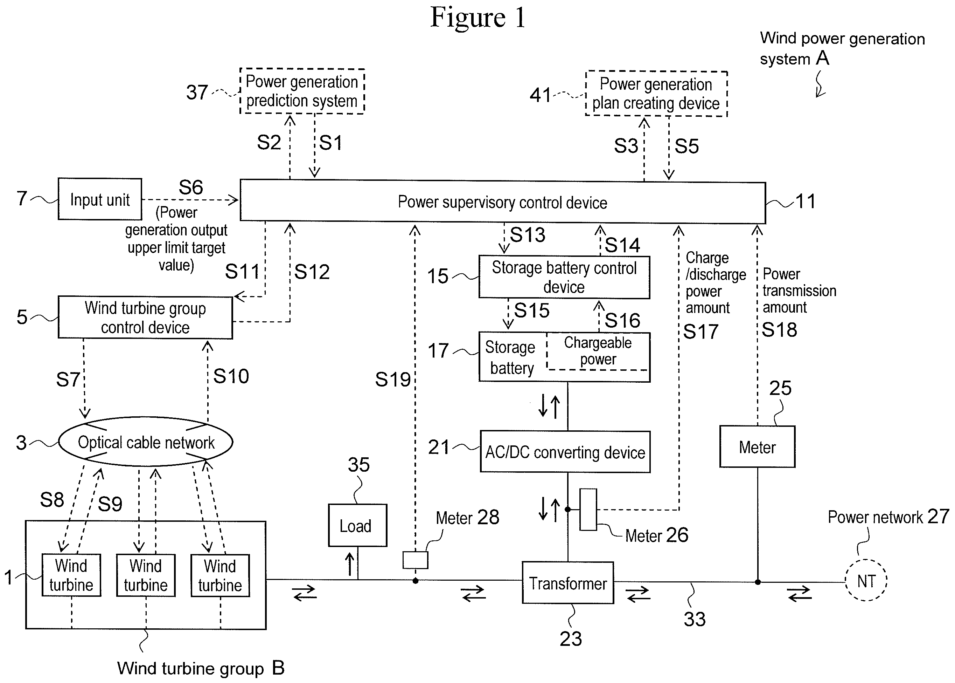

Hereinafter, a power management and control system in a natural energy power generation system with a storage battery according to one embodiment of the present invention will be described with reference to the drawings. Figure 1 is a functional block diagram showing one configuration example of a natural energy power generation system with a storage battery according to the present embodiment. A wind power generation system A shown in Figure 1 includes a power management and control unit at the time of supplying power generated by a wind turbine group B to a power network 27.

As shown in Figure 1, the wind turbine group B includes a plurality of wind turbine power generation apparatuses (wind turbines) 1, and a storage battery 17 which charges and discharges part of the power generated by the wind turbine power generation apparatus 1. A power generation prediction system 37, which performs power generation amount prediction by using, for example, climate data, topographic data, locational conditions of the generator, the performance curve of the generator, operational information data S2 of the generator from an input unit, and the like, predicts a power generation amount in each unit time in each of the plurality of wind power generation apparatuses 1 based on the varying natural conditions. The power generation prediction data S1 is transmitted to a power supervisory control device 11.

The power supervisory control device 11 is a main control unit of the present system, also cooperates with an external power generation plan creating device 41, sends S3 (power generation prediction data amount S1 and storage power amount data S14) to the power generation plan creating device 41, and receives a power transmission plan S5. Further, the power supervisory control device 11 receives storage battery data (storage power amount, operational information, chargeable power) S14/S16 from the storage battery 17 in real time via a storage battery control device 15 which performs control of the storage battery, and transmits charge/discharge command S13/S15 to the storage battery 17. In the storage battery 17, the charge/discharge power amount is measured, and thereby, in combination with the operational information of the storage battery, the present chargeable power can be calculated.

Furthermore, the storage battery 17 is connected to an AC/DC converting device 21, and is configured to supply power to a power network 27 via a transformer 23 and wiring 33. A meter 25 which measures power is also connected to the wiring 33, and a power transmission amount S18 is sent to the power supervisory control device 11 from the meter 25. Further, a charge/discharge power amount S17 is sent to the power supervisory device 11 from a meter 26, and a power transmission amount S19 is sent to the power supervisory control device 11 from a meter 28.

The operator of the system can input a power generation output upper limit target value S6 of the wind turbine group B which is predicted based on the varying natural conditions from an input unit 7.

Further, the wind turbine group control device 5 which performs control of the wind turbines exchanges a power generation upper limit target candidate value S11 of the wind turbine group B, and detailed data S12 such as power generation output, a wind direction, wind speed, a power factor, and reactive power, with the power supervisory control device 11.

The wind turbine group B and the wind turbine group control device 5 are connected through an optical cable network 3, a power generation output upper limit target candidate value and a restrain release command S7/S8 for each of the wind turbines are sent from the wind turbine group control device 5, and power generation output S9/S10 of each of the wind turbines is sent from the wind turbine group B. The power generated in the wind turbine group B is partially consumed by a load 35, but most of the power is transmitted to the storage battery 17 and the power network 27 through the wiring.

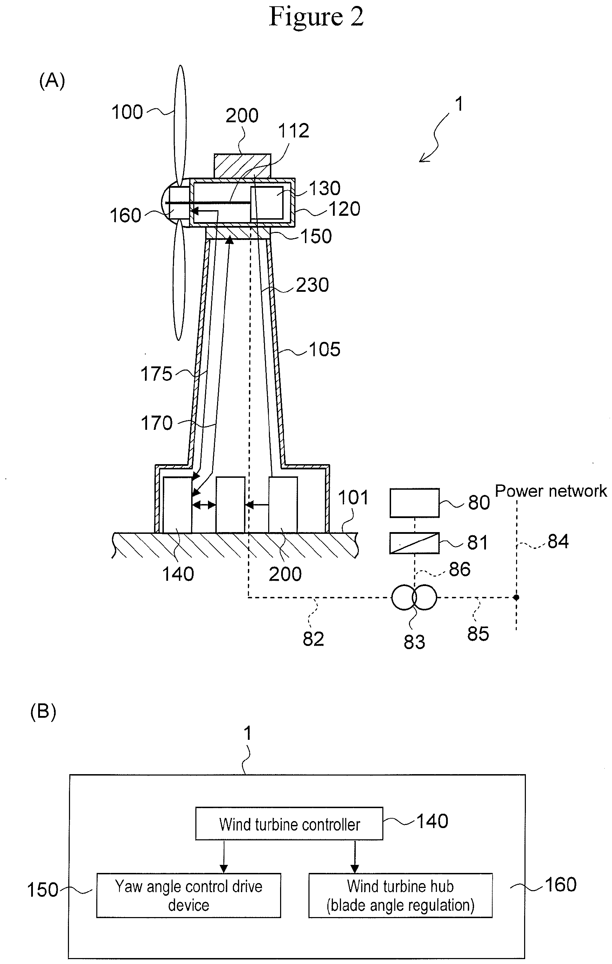

Next, a configuration of the wind power generation apparatus will be described with reference to Figure 2. Figure 2(A) is a sectional view of a wind power generator (wind turbine) observed from a side. As shown in Figure 2(A), a tower section is built on a seat 101, and a yaw angle control drive device 150 is provided at an upper portion of the tower section. Further on an upper portion thereof, a nacelle 120 which is rotated and controlled within a horizontal plane by drive of the yaw angle control drive device 150 is disposed. In control of a wind turbine, a propeller revolution surface of the wind turbine is desired to be controlled to receive wind directly from the front at all times when the direction of the wind changes, and a yaw angle is changed at this time, and control of the yaw angle is called yaw control. The yaw angle can be changed by rotating the nacelle 120 within the horizontal plane.

A blade 100 which is a vane (wing) portion of a propeller type wind turbine is attached to a revolving shaft 112 via a hub (mounting portion of the blade 100), and the angle of the blade 100 is controlled by drive of a pitch angle control drive device 160. In order to utilize the energy of wind effectively, the angle of the blade 100 which receives wind needs to be brought into an optimal state, and the angle of the blade 100 at this time is called a pitch angle (blade angle). Further, a power generator 130, an amplifier (not illustrated) and the like which are connected to the revolving shaft 112 are stored in the nacelle 120. The propeller revolution surface is the surface perpendicular to the revolving shaft 112 at which the blade 100 is disposed.

A wind direction and wind speed detecting optical system unit 200 is disposed at a top portion of the nacelle 120. In the main body unit 200, the data for calculating a wind direction and wind speed is taken out and processed.

The wind direction and wind speed data which are obtained in the main body unit 200 are sent to an anemoscope/anemometer signal processing unit (hereinafter, called a signal processing unit) through a communication system. In the signal processing unit, based on the wind direction and wind speed data, the wind situation (wind direction and wind speed, arrival time of wind and the like) of the wind which blows toward the wind power generator, that is, the wind which is used for power generation in the near future (after a lapse of several seconds to several tens seconds) can be predicted. A laser type anemoscope/anemometer is constructed mainly by the main body unit 200, the optical system unit and the signal processing unit.

The wind situation prediction data calculated by the signal processing unit is transmitted to a controller 140 through the communication system unit, and the controller 140 gives a command to the yaw angle control drive device 150 and the pitch angle drive control device 160 through communication system units 170 and 175 based on the given wind situation data, the yaw angle drive control device 150 changes a yaw angle, and the pitch angle drive control device 160 changes a pitch angle, whereby, the highly efficient operation of the wind power generator, that is, highly efficient use of wind power energy is enabled. Further, the controller 140 always scans and grasps the present yaw angle, pitch angle and window turbine shaft revolution speed (revolution frequency, or revolution speed).

Furthermore, a power cable 82 which is connected to the generator 130 is connected to a power network 84 to be an output terminal, and the storage battery 17 (80) is connectively disposed between the generator 130 and the power network 84 via the AC/DC conversion device 21 (81) in accordance with necessity, and the transformer 23 (83) is disposed between the power network 27 (84) and the power conversion device 81.

The revolution speed of the wind turbine is fixed or changeable only stepwise, or changeable continuously within a set range. The blade 100 receives wind and converts wind power energy into a rotational force, and the generator 130 converts the rotational energy of the blade 100 into electric power. Further, the controller 140 or the other control mechanism takes in and analyzes various quantities necessary for wind power generator control such as a yaw angle, a wind turbine revolution speed and the present wind direction and wind speed, and also outputs a control command to each control drive device (for example, brake equipment and the like) of the wind power generator. Showing the configuration more simply, the wind turbine 1 is constructed by the wind turbine controller 140, the yaw angle control drive device 150 and the wind turbine hub (blade angle regulation mechanism) 160, as shown in Figure 2(B).

By using such a wind turbine, the angle of the blade 100 can be changed, and thereby, even with the same wind direction and wind power, the power generation amount can be controlled to some degree.

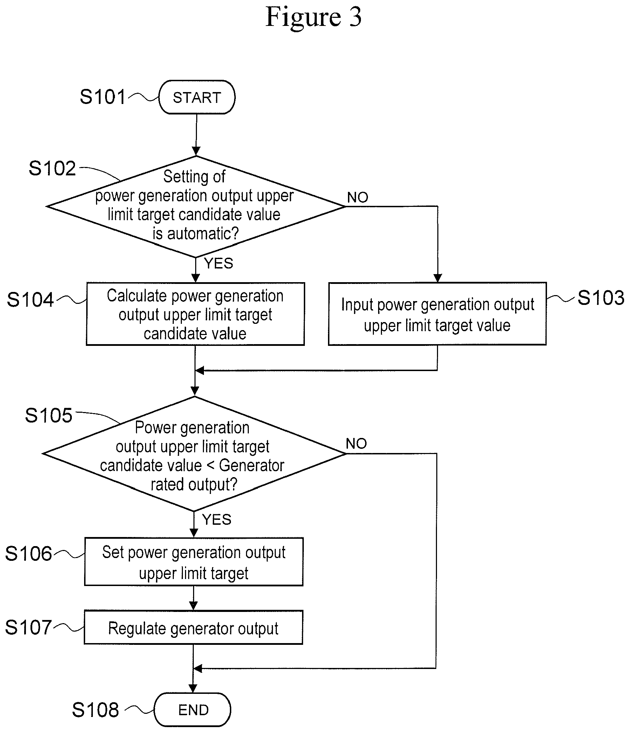

Figure 3 is a flowchart showing a main flow of power management processing according to the present embodiment. As shown in Figure 3, when the power management processing is started (step S101: START), automatic/manual setting of calculation of the power generation output upper limit target candidate value is determined (whether it is automatic calculation or not is determined) in step S102. If it is not automatic calculation (NO), the flow proceeds to step S103, and when the power generation output upper limit target candidate value is inputted in the power supervisory control device 11, the flow proceeds to step S105.

In the case of automatic calculation (YES), the flow proceeds to step S104, and in the power supervisory control device 11, the power generation output upper limit target candidate value is calculated according to the following arithmetic expression.

$$\text{Power generation output upper limit target candidate value} = (\text{power transmission plan}$$

$$\text{power} + \text{station power consumption} + \text{storage battery chargeable power}) \times \text{coefficient}$$

Next, in step S105, the power generation output upper limit target candidate value (input value) inputted in step S103 in the case of manual calculation or the power generation output upper limit target candidate value (calculation value) in step S104 in automatic calculation, and the generator rated output are compared. More specifically, in step S105, it is determined whether the power generation output upper limit target candidate value < generator rated output.

For example, the generation power upper limit target candidate value can be calculated in such a manner that if power transmission plan power + station power consumption = 20,000 kW < wind turbine generator output power 30,000 kW, storage battery output power = -10,000 kW, and power needs to be charged, whereas when the storage battery is fully charged, the chargeable power of the storage battery = 0 kW, and therefore, the output is suppressed to the power generation output upper limit target value = 20,000 kW or less. When control is automated as described above, the value is set to a value which is a slightly lower than (power transmission plan power + station power consumption + chargeable power) by multiplying the (power transmission plan power + station power consumption + chargeable power) with a coefficient of not larger than 1 with safety taken into consideration. For example, if the coefficient is 0.95, the value is 19,000 kW.

Next, if the comparison result of step S105 is YES, the output of the generator exceeds the power generation output upper limit target candidate value, and therefore, in step S106, the power generation output upper limit target is set as in the following expression.

Power generation output upper limit target value = power generation output upper limit target candidate value Next, in step S107, control of regulating the blade angle of the wind turbine is performed so that the power generation output value is close to the set power generation output upper limit target value, and subsequently, the flow proceeds to step S108 to finish the processing (END).

Meanwhile, if the determination result in step S105 is NO, the flow directly proceeds to step S 108 to finish the processing (END). This is because in this case, the storage battery 17 has the allowance relating to charge and discharge, and therefore, it is not necessary to perform power generation control processing of the wind turbine.

Transmission power management also can be continuously performed in response to wind power or the like which always changes by continuing to send the generation power value in the wind turbine to the power supervisory control device.

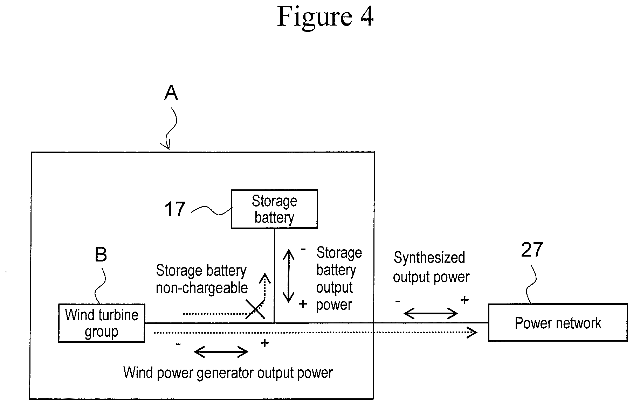

As shown in Figure 4, in the case close to the full charge state in which power cannot be charged into the storage battery 17, the generation power in the wind turbine group B is suppressed, whereby power is not charged in the storage battery 17 while the power supply amount to the power network 27 is kept, and the margin of the charge/discharge power in the storage battery 17 can be easily ensured. If the storage battery is brought into the state with a small margin, a large variation of the wind power cannot be handled.

As above, by adopting the configuration of determining whether control of the power generation amount of the wind turbine needs to be performed based on the determination of whether the power generation output upper limit target candidate value (input value or calculation value) = (power transmission plan power + station power consumption + storage battery chargeable power) × coefficient < generator rated output, and controlling the power generation amount of the wind turbine only when it is determined that control needs to be performed, a predetermined transmission power can be stably supplied to the power network without depending on the state of the storage battery 17.

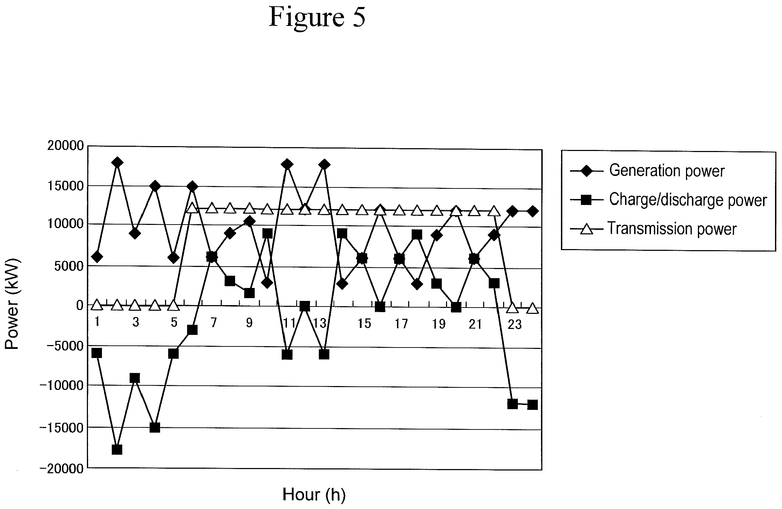

Figure 5 is a diagram showing one example of hourly changes of the generation power of the wind turbine which is obtained based on the above described configuration and control, the charge/discharge power in the storage battery, and the transmission power. As shown in Figure 5, it is understood that the generation power of the wind turbine significantly changes in accordance with the wind power and the wind direction within a day. The variation amount is absorbed by power charge/discharge of the storage battery, a supply time zone is freely set to a time zone when the demand for power is high or the like, and the power can be intensively supplied. When the above described control is not performed, it is necessary to increase the number of storage batteries or the capacity of the storage batteries to make it possible to absorb even a large variation amount by charge/discharge of the storage batteries. Meanwhile, as shown in Figure 5, it is found out that even if the storage battery of a small capacity is used, or the number of storage batteries is reduced, a desired transmission power can be obtained, as a result that the control according to the present embodiment is performed, and thereby, even if a large variation occurs, the amount of it is absorbed by not only the storage battery but also the control of the generation power of the wind turbine.

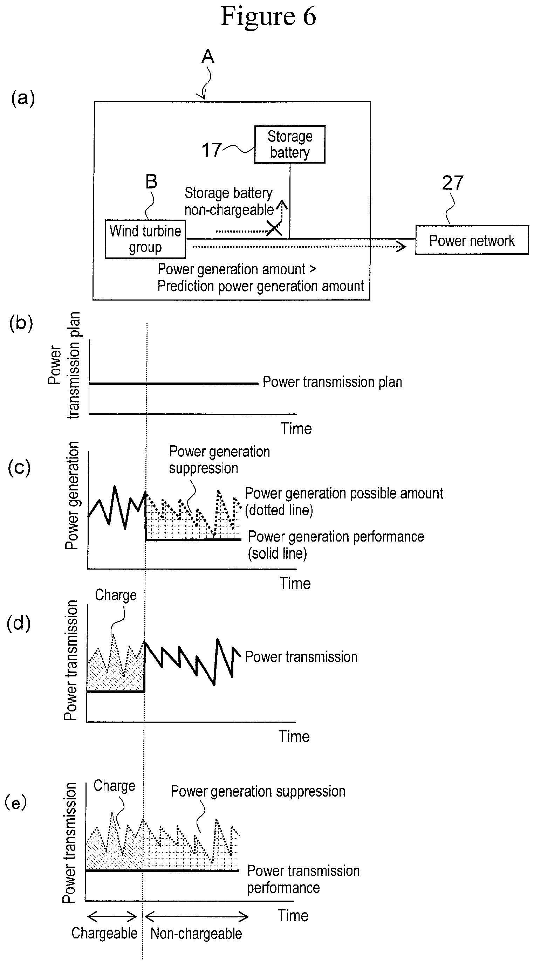

Hereinafter, specific examples will be described according to the present invention. Figure 6 is a diagram showing a flow of power in a state in which power cannot be charged in the storage battery, that is, a state close to full charge (Figure 6(a)), and an example of the relationship of power transmission/power generation and time (Figures 6(b) to (e)). As shown in Figure 6, when power cannot be charged in the storage battery, only power transmission to the power network 27 from the wind turbine group B is available. As shown in Figure 6(b), there is the time zone in which the possible power generation amount shown in Figure 6(c) exceeds the power transmission plan with respect to the power transmission plan value. When the power generation amount of the wind turbine is not controlled, in this time zone, power is charged in the storage battery 17 only for the time in which charge is possible as shown in Figure 6(d), after which, power cannot be charged into the storage battery 17, and the electricity outside the plan flows to the power network. According to the present invention, as shown in Figure 6(c), the control of suppressing power generation for suppressing the power generation amount of the wind turbines in the wind turbine group B is performed, and power transmission as planned can be performed as shown in Figure 6(e).

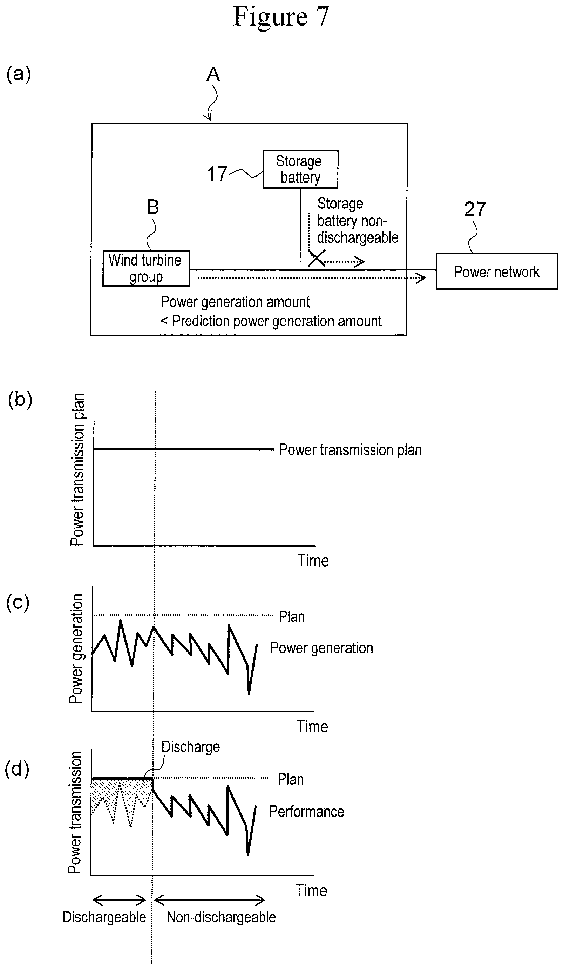

Figure 7 is a diagram showing a flow of power in the state in which the storage battery cannot discharge power, that is, the state close to the end of discharge (Figure 7(a)), and an example of the relationship of power transmission/power generation and time (Figure 7(b) to Figure 7(d)). As shown in Figure 7(a), when the power cannot be discharged from the storage battery 17, only power transmission to the power network 27 from the wind turbine group B is available, but since when the power generation performance falls below the power transmission plan value shown by the dotted line as shown in Figure 7(c) with respect to the power transmission plan which does not depend on the time shown in Figure 7(b), power cannot be discharged from the storage battery in that time zone (power cannot be charged in the storage battery, either), the power generation amount < the predicted power generation amount, power discharge is performed only for the time in which power can be discharged as shown in Figure 7(d), and in the time zone thereafter, power discharge cannot be performed. However, in this case, control of suppressing the power generation amount of the wind turbine in the wind turbine group B does not have to be performed. Alternatively, when the control of suppression is performed, control to release suppression is performed.

As described above, by combining the power generation prediction function and the power generation control function with each other by the power management and control system according to the present embodiment, even if power is generated to exceed the supply plan power, and furthermore, the storage battery does not have the storage reserve capacity, in the exchange where the power transmission amount is fixed in advance, the generation power of the generator is controlled to be transmitted as the supply plan, and the adjustment range of the storage battery to be secured in preparation for the case in which the generation power exceeds the prediction can be reduced, whereby reduction in capacity of the storage battery is realized, and a contribution can be made to promotion of building a natural energy power station with a storage battery.

Furthermore, in the above described embodiment, the configuration and the like illustrated in the accompanying drawings are not limited to them, and can be properly changed within the range of exhibition of the effect of the present invention. The others can be carried out by being properly changed without departing from the range of the object of the present invention.

Further, processing of each part may be performed by recording a program for realizing the functions described in the present embodiment in a computer-readable recording medium, and causing a computer system to read the program recorded in the recording medium and execute it. The "computer system" described here includes OS and hardware such as a peripheral device.

Further, if "computer system" uses a WWW system, it includes a homepage distribution environment (or display environment).

Further, "computer-readable recording medium" means portable media such as a flexible disk, a magneto-optical disk, a ROM, and a CD-ROM, and a storage device such as a hard disk contained in a computer system. Further, "computer-readable recording media" includes the thing which dynamically retains a program for a short time like a communication line in the case of transmitting a program through a communication line such as a network such as the Internet and a telephone line, the thing which retains a program for a fixed time like a volatile memory in a computer system to be a server and a client in such a case. Further, the aforesaid program may be the one for realizing part of the aforementioned function, and further may be the one that can realize the aforementioned function in combination with the program which is already recorded in a computer system.

Industrial Applicability

The present invention can be used in for a natural energy power generation system.

**Claims**

1. A power management and control system which comprises a natural energy power generation apparatus and a storage battery adapted to charge and discharge part of power generated in the natural energy power generation apparatus, wherein the power management and control system is configured to combine total generation power from the natural energy power generation apparatus and power to be supplied from the storage battery to supply constant output power to a power network, the power management and control system having power transmission plan calculating means which is adapted to receive power generation amount prediction data predicting a power generation amount in each unit time in the natural energy power generation apparatus, and is adapted to calculate a plan for power transmission to the power network to keep a power storage amount of the storage battery in a designated range, based on the power generation amount prediction data, the power management and control system is configured to control a charge and discharge amount of the storage battery in accordance with an actual power generation amount with power generation output varying based on a fixed power transmission plan which is fixed with reference to a power transmission plan calculation result by the power transmission plan calculating means to supply constant output power to the power network in accordance with the fixed power transmission plan, comprising:

   a power generation control system adapted to control the generation power of the natural energy power generation apparatus based on a magnitude of present chargeable power which is received from the storage battery in real time,
   wherein the power management and control system further comprises a power supervisory control unit which is adapted to compare a generation power output upper limit target candidate value that depends on power which can be charged in and discharged from the storage battery, and a rated output value of the natural energy power generation apparatus, and is adapted to control the power generation control system with the generation power output upper limit target candidate value as a power generation output upper limit target value, when the rated output value of the natural energy power generation apparatus is greater than the generation power output upper limit target candidate value,
   wherein the power generation output upper limit target candidate value is obtained from calculation of (power transmission plan power + station power consumption + chargeable power) $\times$ coefficient (value not larger than 1).

2. The power management and control system according to claim 1, further comprising:
   a power supervisory control unit which is arranged to accept input of a power generation output upper limit target candidate value of the natural energy power generation apparatus which is predicted from the power transmission plan power, the power which can be charged in the storage battery, and station power consumption, and is configured to control the power generation control system with any smaller one of the inputted power generation output upper limit target candidate value and a rated output power of the natural energy power generation apparatus as a power generation output upper limit target value.

3. The power management and control system according to any one of claims 1 to 2,
   wherein the natural energy power generation apparatus is a wind power generation apparatus, and controls the generation power by regulating a blade angle of a wind turbine.

4. The power management and control system according to any one of claims 1 to 3,
   wherein when a total generation power from the natural energy power generation apparatus is larger than the power generation output upper limit target value, generation power of the natural energy power generation apparatus is controlled to be suppressed.

5. A control device for a natural energy power generation apparatus which is used in the power management and control system according to any one of claims 1 to 4.

**Patentansprüche**

1. Leistungsverwaltungs- und -steuersystem, das eine Natürliche-Energie-Leistungserzeugungsvorrichtung und einen Akkumulator umfasst, der ausgelegt ist, um einen Teil der Leistung, die in der Natürliche-Energie-Leistungserzeugungsvorrichtung erzeugt wurde, zu laden und zu entladen, wobei das Leistungsverwaltungs- und - steuersystem ausgelegt ist, um die gesamte Erzeugungsleistung aus der Natürliche-Energie-Leistungserzeugungsvorrichtung mit Leistung, die vom Akkumulator bereitgestellt wird, zu kombinieren, um einem Leistungsnetzwerk eine konstante Ausgabeleistung bereitzustellen, wobei das Leistungsverwaltungs- und -steuersystem ein Leistungsübertragungsplan-Berechnungsmittel aufweist, das ausgelegt ist, um Leistungserzeugungsmengen-Vorhersagedaten, die eine Leistungserzeugungsmenge in jeder Zeiteinheit in der Natürliche-Energie-Leistungserzeugungsvorrichtung vorhersagen, zu empfangen, und das ausgelegt ist, um einen Plan zur Leistungsübertragung an das Leistungsnetzwerk zu berechnen, um auf Basis der Leistungserzeugungsmengen-Vorhersagedaten eine Leistungsspeichermenge des Akkumulators in einem festgelegten Bereich zu halten, wobei das Leistungsverwaltungs- und -steuersystem ausgelegt ist, um eine Ladungs- und Entladungsmenge des Akkumulators in Übereinstimmung mit einer tatsächlichen Leistungserzeugungsmenge, wobei die Leistungserzeugungsausgabe variiert, auf Basis eines festen Leistungsübertragungsplans, der in Bezug auf ein Leistungsübertragungsplan-Berechnungsergebnis von dem Leistungsübertragungsplan-Berechnungsmittel festgelegt wird, zu steuern, um dem Leistungsnetzwerk in Übereinstimmung mit dem festen Leistungsübertragungsplan eine konstante Ausgabeleistung bereitzustellen, das Folgendes umfasst:

ein Leistungserzeugungssteuersystem, das ausgelegt ist, um die Erzeugungsleistung der Natürliche-Energie-Leistungserzeugungsvorrichtung auf Basis einer Größe einer aktuell ladbaren Leistung, die in Echtzeit von dem Akkumulator erhalten wird, zu steuern,
wobei das Energieverwaltungs- und Steuersystem ferner eine Leistungsüberwachung-Steuereinheit umfasst, die ausgelegt ist, um einen Erzeugungsleistungsausgabe-Obergrenzenzielkandidatenwert, der von der Leistung, die in den Akkumulator geladen und aus diesem entladen wird, abhängt, mit einem Ausgabesollwert der Natürliche-Energie-Leistungserzeugungsvorrichtung zu vergleichen, und die ausgelegt ist, um das Leistungserzeugungssteuersystem mit dem Erzeugungsleistungsausgabe-Obergrenzenzielkandidatenwert als Leistungserzeugungsausgabe-Obergrenzenzielwert zu steuern, wenn der Ausgabesollwert der Natürliche-Energie-Leistungserzeugungsvorrichtung höher als der Erzeugungsleistungsausgabe-Obergrenzenzielkandidatenwert ist,
wobei der Erzeugungsleistungsausgabe-Obergrenzenzielkandidatenwert aus der Berechnung von (Leistungsübertragungsplanleistung + Anlagenleistungsverbrauch + ladbare Leistung) x Koeffizient (Wert nicht höher als 1) erhalten wird.

2. Leistungsverwaltungs- und -steuersystem nach Anspruch 1, das ferner Folgendes umfasst:
eine Leistungsüberwachung-Steuereinheit, die angeordnet ist, um die Eingabe eines Leistungserzeugungsausgabe-Obergrenzenzielkandidatenwerts von der Natürliche-Energie-Leistungserzeugungsvorrichtung, der von der Leistungsübertragungsplanleistung vorhergesagt wird, die Leistung, die im Akkumulator gespeichert werden kann, und Anlageleistungsverbrauch zu empfangen, und ausgelegt ist, um das Leistungserzeugungssteuersystem mit einem beliebigen kleineren aus dem eingegebenen Leistungserzeugungsausgabe-Obergrenzenzielkandidatenwert und einer Sollausgabeleistung der Natürliche-Energie-Leistungserzeugungsvorrichtung als Leistungserzeugungsausgabe-Obergrenzenzielwert zu steuern.

3. Leistungsverwaltungs- und -steuersystem nach einem der Ansprüche 1 bis 2, wobei die Natürliche-Energie-Leistungserzeugungsvorrichtung eine Windleistungserzeugungsvorrichtung ist und die Erzeugungsleistung durch Regulierung eines Rotorblattwinkels einer Windkraftanlage steuert.

4. Leistungsverwaltungs- und -steuersystem nach einem der Ansprüche 1 bis 3, wobei wenn eine Gesamterzeugungsleistung von der Natürliche-Energie-Leistungserzeugungsvorrichtung höher als der Leistungserzeugungsausgabe-Obergrenzenzielwert ist, die Erzeugungsleistung der Natürliche-Energie-Leistungserzeugungsvorrichtung gesteuert wird, um unterdrückt zu werden.

5. Steuerungsvorrichtung für eine Natürliche-Energie-Leistungserzeugungsvorrichtung, die in einem Leistungsverwaltungs- und -steuersystem nach einem der Ansprüche 1 bis 4 genutzt wird.

**Revendications**

1. Système de gestion et de commande d'électricité qui comprend un appareil de production d'électricité à base d'énergie naturelle et une batterie de stockage adaptée pour charger et décharger une partie de l'électricité générée dans l'appareil de production d'électricité à base d'énergie naturelle, dans lequel le système de gestion et de commande d'électricité est configuré pour combiner de l'électricité générée totale à partir de l'appareil de production d'électricité à base d'énergie naturelle et de l'électricité à fournir à partir de la batterie de stockage pour fournir une électricité de sortie constante à un réseau électrique, le système de gestion et de commande d'électricité ayant des moyens de calcul de plan de transmission d'électricité qui sont adaptés pour recevoir des données de prédiction de quantité de production d'électricité prédisant une quantité de production d'électricité dans chaque unité de temps dans l'appareil de production d'électricité à base d'énergie naturelle, et est adapté pour calculer un plan de transmission d'électricité vers le réseau électrique afin de maintenir une quantité de stockage d'électricité de la batterie de stockage dans une plage désignée, sur la base des données de prédiction de quantité de production d'électricité, le système de gestion et de commande d'électricité est configuré pour commander une quantité de charge et de décharge de la batterie de stockage conformément à une quantité de production d'électricité réelle avec une sortie de production d'électricité variant sur la base d'un plan de transmission d'électricité fixe qui est fixe en référence à un résultat de calcul de plan de transmission d'électricité par les moyens de calcul de plan de transmission d'électricité pour fournir une électricité de sortie constante au réseau électrique conformément au plan de transmission d'électricité fixe, comprenant :

un système de commande de production d'électricité adapté pour commander la production d'électricité de l'appareil de production d'électricité à base d'énergie naturelle sur la base d'une amplitude d'électricité pouvant être chargée actuelle qui est reçue à partir de la batterie de stockage en temps réel, dans lequel le système de gestion et de commande d'électricité comprend en outre une unité de commande de supervision d'électricité qui est adaptée pour comparer une valeur candidate cible de limite supérieure de sortie d'électricité de production qui dépend de l'électricité qui peut être chargée dans et déchargée à partir de la batterie de stockage, et une valeur de sortie nominale de l'appareil de production d'électricité à base d'énergie naturelle, et est adaptée pour commander le système de commande de production d'électricité avec la valeur candidate cible de limite supérieure de sortie d'électricité de production en tant que valeur cible de limite supérieure de sortie de production d'électricité, lorsque la valeur de sortie nominale de l'appareil de production d'électricité à base d'énergie naturelle est supérieure à la valeur candidate cible de limite supérieure de sortie d'électricité de production, dans lequel la valeur candidate cible de limite de sortie de production d'électricité est obtenue à partir d'un calcul (électricité de plan de transmission d'électricité + consommation d'électricité de station + électricité facturable) x coefficient (valeur non supérieure à 1).

2.  Système de gestion et de commande d'électricité selon la revendication 1, comprenant en outre :
une unité de commande de supervision d'électricité qui est agencée pour accepter une entrée d'une valeur candidate cible de limite supérieure de sortie de production d'électricité de l'appareil de production d'électricité à base d'énergie naturelle qui est prédite à partir de l'électricité de plan de transmission d'électricité, de l'électricité qui peut être chargée dans la batterie de stockage, et la consommation électrique de station, et est configurée pour commander le système de commande de production d'électricité avec n'importe quelle valeur plus petite parmi la valeur candidate cible de limite supérieure de sortie de production d'électricité entrée et une électricité de sortie nominale de l'appareil de production d'électricité à base d'énergie naturelle en tant que valeur cible de limite supérieure de sortie de production d'énergie.

3.  Système de gestion et de commande d'électricité selon l'une quelconque des revendications 1 à 2, dans lequel l'appareil de production d'électricité à base d'énergie naturelle est un appareil de production d'électricité éolienne, et commande l'électricité de production en régulant un angle de pale d'une éolienne.

4.  Système de gestion et de commande d'électricité selon l'une quelconque des revendications 1 à 3, dans lequel lorsqu'une électricité de production totale provenant de l'appareil de production d'électricité à base d'énergie naturelle est supérieure à la valeur cible de limite supérieure de sortie de production d'électricité, l'électricité de production de l'appareil de production d'électricité à base d'énergie naturelle est commandée pour être supprimée.

5.  Dispositif de commande pour un appareil de production d'électricité à base d'énergie naturelle qui est utilisé dans le système de gestion et de commande d'électricité selon l'une quelconque des revendications 1 à 4.

# Figure 1

Wind power generation system A

Power generation plan creating device 41 — S5, S3

Power generation prediction system 37 — S1, S2

Input unit 7 — S6 (Power generation output upper limit target value)

Power supervisory control device 11

Storage battery control device 15 — S13, S14
Storage battery 17 — S15, S16
Chargeable power
AC/DC converting device 21

Charge/discharge power amount S17
Power transmission amount S18
Meter 25
Meter 26
Meter 28 — S19

Wind turbine group control device 5 — S11, S12
Optical cable network 3 — S7, S10
Wind turbine group B 1 — S8, S9

Transformer 23
Load 35
Power network 27
NT
33

# Figure 2

(A)

Power network

(B)

| Wind turbine controller | 140 |

| Yaw angle control drive device | Wind turbine hub (blade angle regulation) |

150

160

# Figure 3

S101 — ( START )

S102 — ◇ Setting of power generation output upper limit target candidate value is automatic? ◇ — NO

YES

S104 — Calculate power generation output upper limit target candidate value

S103 — Input power generation output upper limit target value

S105 — ◇ Power generation output upper limit target candidate value < Generator rated output? ◇ — NO

YES

S106 — Set power generation output upper limit target

S107 — Regulate generator output

S108 — ( END )

# Figure 4

# Figure 5

EP 2 375 561 B1

# Figure 6

A

(a)

Storage battery

17

B

Storage battery non-chargeable

Wind turbine group

Power network

27

Power generation amount > Prediction power generation amount

(b)

Power transmission plan

Power transmission plan

Time

(c)

Power generation

Power generation suppression

Power generation possible amount (dotted line)

Power generation performance (solid line)

Time

(d)

Power transmission

Charge

Power transmission

Time

(e)

Power transmission

Charge

Power generation suppression

Power transmission performance

Time

Chargeable | Non-chargeable

# Figure 7

(a)

A

Storage
battery

17

Storage
battery non-
dischargeable

27

B

Wind turbine
group

X ·······>

Power network

Power generation amount
< Prediction power generation amount

(b)

Power transmission plan

Power transmission plan

Time

(c)

Power generation

Plan

Power generation

Time

(d)

Discharge

Power transmission

Plan

Performance

Time

Dischargeable    Non-dischargeable

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3758359 B
- JP 3981690 B
- JP 3740099 B
- JP 2006511190 A
- JP 3905692 B
- US 2008179887 A1